# EUROPEAN PATENT APPLICATION

(11) **EP 4 501 302 A1**
(43) Date of publication of application: **05.02.2025**
(21) Application number: 23862782.2
(22) Date of filing: 10.07.2023
(51) Int. Cl.: A61J 3/07, B23K 26/382

(54) **EDIBLE BODY PERFORATING METHOD**

(30) Priority: 07.09.2022 JP 2022142062
(71) Applicant: Qualicaps Co., Ltd., Nara 639-1032 (JP)
(72) Inventor: FUJINAKA Daiya, Yamatokoriyama-shi, Nara 639-1032 (JP); SAKURAMOTO Hiroshi, Yamatokoriyama-shi, Nara 639-1032 (JP)
(74) Representative: Isarpatent
(86) International application number: PCT/JP2023/025427
(87) International publication number: WO 2024/053238

(57) **Abstract**

Provided is a method for drilling an edible body in which a release hole for releasing an active ingredient accommodated in the edible body to the outside is formed on a surface of the edible body, wherein the method comprises a laser irradiation step of forming multiple closed curves on the surface of the edible body by laser irradiation. In the laser irradiation step, after one closed curve C1 is formed, another closed curve C2 is formed along an inner side or an outer side of the closed curve C1, and the closed curves C1 and C2 are brought into contact with each other in a line width direction to form the release hole 104, so that drilling into the edible body can be easily and reliably performed.

## Description

### Technical Field

The present invention relates to a method for drilling an edible body, and more particularly to a method for drilling an edible body in which a release hole for releasing an active ingredient accommodated in the edible body to the outside is formed on a surface of the edible body.

### Background Art

As an edible body such as a tablet or a capsule to be used in a drug delivery system, an osmotic pump type preparation in which a drug layer and an extruded layer are coated with a semipermeable membrane is known. In this edible body, a release hole is formed in the semipermeable membrane covering the drug layer, so that the drug component of the drug layer is pushed out from the release hole at a prescribed speed when the extruded layer is expanded due to ingress of moisture through the semipermeable membrane by intake into the body.

As a method of forming a drug release hole by laser irradiation, Patent Literature 1 discloses forming a central plug surrounded by a circle by performing laser irradiation so as to draw the circle on a dispenser accommodating a drug, and then removing the central plug.

### Citation List

### Patent Literature

Patent Literature 1: JP 10-510787 A

### Summary of Invention

### Technical Problem

In the drilling method disclosed in Patent Literature 1 described above, laser energy is suppressed by drilling only the outer edge of the release hole by laser irradiation, but it is assumed that a release hole having a large area is formed, and it is difficult to reliably open the entire release hole when forming a release hole having a common size (for example, the diameter is about 0.6 mm).

On the other hand, in the case of forming a release hole having substantially the same diameter as a laser spot diameter, not only the hole diameter or the depth of the hole tends to be difficult to control, but also a large laser oscillator having a high output is required, and thus there is a possibility that the installation space and the manufacturing cost become excessively large.

Therefore, an object of the present invention is to provide a method for drilling an edible body capable of reliably drilling the edible body at low cost.

### Solution to Problem

The object of the present invention is achieved by a method for drilling method for drilling an edible body in which a release hole for releasing an active ingredient accommodated in the edible body to the outside is formed on a surface of the edible body, the method comprising a laser irradiation step of forming multiple closed curves on the surface of the edible body by laser irradiation, wherein in the laser irradiation step, after one of the closed curves is formed, another one of the closed curves is formed along an inner side or an outer side of said one of the closed curves, and these two closed curves are thereby brought into contact with each other in a line width direction to form the release hole.

In this method for drilling an edible body, it is preferable to form the multiple closed curves concentrically.

It is preferable to start formation of said another of the closed curves from a position farthest from a formation end position of said one of the closed curves.

It is preferable to provide a prescribed heat dissipation time during formation of the multiple closed curves.

It is preferable to form said one of the closed curves by performing laser irradiation such that the same portion is traced multiple times.

It is preferable that the laser irradiation to the edible body is performed while sucking fumes generated from the edible body.

It is preferable that the edible body under conveyance is subjected to laser irradiation such that a distance from a laser output position to the edible body is equal at a start time and an end time of the laser irradiation.

It is preferable that an average output of the laser light to be applied is 10 to 300 W, a scanning speed is 100 to 5000 mm/s, and a spot diameter is 0.1 to 3 mm. Advantageous Effects of Invention

According to the method for drilling an edible body of the present invention, it is possible to easily and reliably drill the edible body.

### Brief Description of Drawings

FIG. 1 is a schematic front view illustrating one example of a drilling device to be used in the method for drilling an edible body of the present invention.
FIG. 2 is a block diagram of the printer illustrated in FIG. 1.
FIG. 3 is a sectional view taken along line A-A of FIG. 1.
FIG. 4 is a sectional view schematically illustrating one example of an edible body.
FIG. 5 is a main part enlarged view illustrating a process of drilling an edible body.
FIG. 6 is a schematic diagram for explaining one example of a method for drilling an edible body.
FIG. 7 is a schematic diagram for explaining another example of a method for drilling an edible body.
FIG. 8 is a schematic diagram for explaining still another example of a method for drilling an edible body.
FIG. 9 is a schematic diagram for explaining still another example of a method for drilling an edible body.
FIG. 10 is a main part sectional view illustrating a modification example of the drilling device illustrated in FIG. 1.
FIG. 11 is a schematic front view illustrating another modification example of the drilling device illustrated in FIG. 1.

### Description of Embodiments

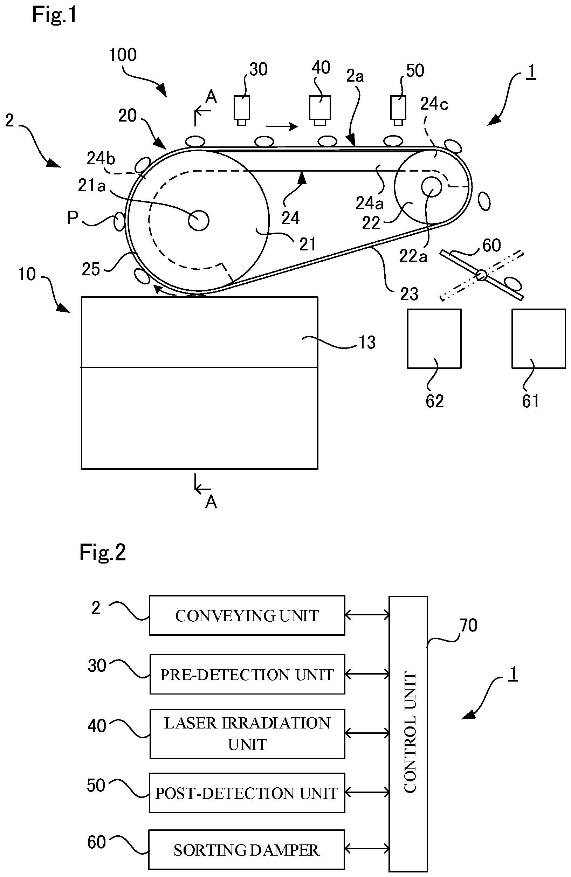

Hereinafter, embodiments of the present invention will be described with reference to the accompanying drawings. FIG. 1 is a schematic front view illustrating one example of a drilling device to be used in the method for drilling an edible body of the present invention, and FIG. 2 is a block diagram of the drilling device illustrated in FIG. 1. As illustrated in FIGS. 1 and 2, the drilling device 1 includes a conveying unit 2, a pre-detection unit 30, a laser irradiation unit 40, a post-detection unit 50, and a sorting damper 60. The pre-detection unit 30, the laser irradiation unit 40, the post-detection unit 50, and the sorting damper 60 are sequentially arranged along the conveyance direction of the conveying unit 2, and are operationally controlled by a control unit 70.

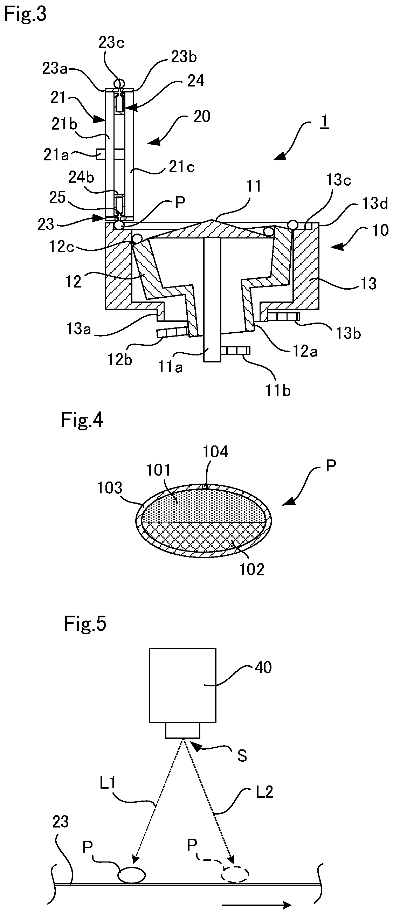

FIG. 3 is a sectional view taken along line A-A of FIG. 1. As illustrated in FIGS. 1 and 3, the conveying unit 2 includes a first conveying device 10 and a second conveying device 20. The first conveying device 10 includes a cap-like disk 11, an intermediate ring 12 that accommodates the disk 11, and a rotary ring 13 that accommodates the intermediate ring 12.

While the rotation shafts 11a and 13a of the disk 11 and the rotary ring 13 extend in the vertical direction, the rotation shaft 12a of the intermediate ring 12 is disposed so as to be slightly tilted with respect to the rotation shafts 11a and 13a. The rotation shafts 11a, 12a, and 13a are connected to drive sources (not illustrated) such as motors individually provided via speed reducers 11b, 12b, and 13b, respectively, and can independently rotationally drive the disk 11, the intermediate ring 12, and the rotary ring 13.

Conveying surfaces 12c and 13c are respectively formed on upper portions of the intermediate ring 12 and the rotary ring 13 along the circumferential direction. The radially outer side of the conveying surface 13c of the rotary ring 13 is covered with a ring-shaped protrusion 13d.

The second conveying device 20 includes a first pulley 21 and a second pulley 22 in which rotation shafts 21a and 22a are arranged horizontally, an endless belt body 23 wrapped around the first pulley 21 and the second pulley 22, and a guide member 24 arranged along a conveyance direction of the belt body 23. A straight portion of the belt body 23 located between the first pulley 21 and the second pulley 22 is horizontally disposed above the first pulley 21 and the second pulley 22 to form a straight conveyance path 2a.

As illustrated in FIG. 3, the first pulley 21 is configured such that two circular plates 21b and 21c are connected by a rotation shaft 21a in a state of being spaced apart from each other. Similarly to the first pulley 21, the second pulley 22 also includes two circular plates connected by the rotation shaft 22a with a space provided therebetween. The first pulley 21 or the second pulley 22 is driven by a drive motor (not illustrated). The encoder information of the drive motor is transmitted to the control unit 70.

The belt body 23 includes two belt-shaped conveyance belts 23a and 23b, and the conveyance belts 23a and 23b are wrapped around the circular plates 21b and 21c of the first pulley 21, respectively. Between the two conveyance belts 23a and 23b, an opening 23c including a fine gap is formed throughout the circumference of the belt body 23. The conveyance belts 23a and 23b may be formed of, for example, flat belts made of a soft material such as silicone rubber.

As illustrated in FIG. 1, the guide member 24 includes a straight portion 24a disposed immediately below the vicinity of the belt body 23 extending horizontally along the conveyance path 2a between the first pulley 21 and the second pulley 22, and arcuate portions 24b and 24c provided on both sides of the straight portion 24a in the conveyance direction. The arcuate portions 24b and 24c are inserted between the pairs of circular plates of the first pulley 21 and the second pulley 22, respectively, and are formed to arcuately curve along the belt body 23 wrapped around the first pulley 21 and the second pulley 22.

As illustrated in FIG. 3, the guide member 24 is formed in a hollow cylindrical shape, and a slit-like suction part 25 is formed along the opening 23c in a portion where the guide member 24 faces the opening 23c of the belt body 23. The inside of the guide member 24 can be decompressed by the operation of a vacuum pump (not illustrated), and the edible body P can be conveyed together with the belt body 23 with the edible body P being attracted to the belt body 23 by sucking the edible body P to the suction part 25 through the opening 23c of the belt body 23. The opening 23c of the belt body 23 of the present embodiment is continuously formed between the two conveyance belts 23a and 23b along the longitudinal direction. However, the belt body 23 may be formed as a single band-like belt, and openings in such a shape as a circular shape, an elliptical shape, or a slit shape may be intermittently formed along the longitudinal direction of the band-like belt.

The pre-detection unit 30 includes, for example, a CCD camera, and captures an image of the edible body conveyed by the second conveying device 20 to acquire pre-imaging data. The acquired pre-imaging data is used for defect inspection of the surface of the edible body, acquisition of position information of the edible body, setting of irradiation timing and laser scanning angle of the laser irradiation unit 40, and the like.

The laser irradiation device 40 is a device that scans laser light emitted from a laser oscillator, and modifies or peels (engraves) a surface of the edible body by thermal energy to volatilize or scatter the surface, thereby drilling the surface of the edible body. As the laser irradiation device 40, a pulse laser device capable of controlling a pulse width can be suitably used. The type of the laser light is not necessarily limited, but it is preferable that the laser beam can drill the surface of the edible body accurately with a desired size and depth, and examples thereof include UV laser light and CO2 laser light. In particular, it is preferable to use a CO2 laser having high absorbability by a surface material (for example, a cellulose membrane) of the edible body.

The post-imaging unit 50 includes, for example, a CCD camera, and captures an image of the edible body after drilling to acquire post-imaging data. The acquired post-imaging data is used for inspection of a drilling state, setting of a laser scanning angle of the laser irradiation unit 40, and the like.

The sorting damper 60 is operationally controlled by the control unit 70 on the basis of the pre-imaging data of the pre-detection unit 30 and the post-imaging data of the post-imaging unit 50, and sorts edible bodies to a non-defective product box 61 and a defective product box 62.

By drilling an edible body such as a tablet, a capsule, or a solid food in which an active ingredient of a drug or the like is accommodated, the drilling device 1 having the configuration described above can form a release hole for releasing the active ingredient on a surface of the edible body. FIG. 4 is a sectional view schematically illustrating an osmotic pump type tablet, which is one example of such an edible body. In the edible body P illustrated in FIG. 4, a drug layer 101 containing an active ingredient and an expansion layer 102 that expands due to water absorption are covered with a semipermeable membrane 103, and the active ingredient of the drug layer 101 can be released from a release hole 104 at a desired speed by forming the release hole 104 with a prescribed dimensional accuracy in the semipermeable membrane 103 provided on the drug layer 101 side using a drilling device 1.

Next, a method for drilling an edible body using the drilling device 1 having the configuration described above will be described. In a state where the disk 11, the intermediate ring 12, and the rotary ring 13 of the first conveying device 10 are rotationally driven in the same direction, when multiple edible bodies P are fed onto the disk 11, the edible bodies P receive a centrifugal force and move to the conveying surface 13c of the rotary ring 13 via the conveying surface 12c of the intermediate ring 12. In this way, the edible bodies P are conveyed in the rotation direction of the rotary ring 13 while being aligned in a line on the conveying surface 13c such that the longitudinal direction is along the circumferential direction of the rotary ring 13.

The edible body P aligned and conveyed toward the second conveying device 20 by the first conveying device 10 is sequentially attracted to the belt body 23 and ascends in the vicinity of the lower portion of the first pulley 21 by the suction at the suction part 25, and is conveyed in the arrowed direction along the straight conveyance path 2a by the second conveying device 20 while maintaining the alignment state, and sequentially passes through the vicinity of the pre-detection unit 30, the laser irradiation unit 40, and the post-detection unit 50. Based on the detection of the edible body P by the pre-detection unit 30, the control unit 70 controls the operation of the laser irradiation unit 40 at the timing when the edible body P passes near the laser irradiation unit 40, and performs desired drilling on the edible body P moving. The drilled edible body P is detected by the post-detection unit 50 and then conveyed toward the sorting device 60. The control unit 70 determines the presence or absence of a defect such as a chip or a crack of the edible body P and whether or not the position, shape, size, and the like of the drilled hole are appropriate on the basis of the detection by the pre-detection unit 30 and the post-detection unit 50, and sorts edible bodies P into non-defective products and defective products by the operation of the sorting device 60.

FIG. 5 is a main part enlarged view illustrating a process of drilling an edible body P. As illustrated in FIG. 5, it is preferable to perform the laser irradiation on the edible body P under conveyance such that the distance from the laser output position S of the laser irradiation unit 40 to the edible body P is equal at the start of the laser irradiation for drilling and at the end of the laser irradiation when drilling is completed. The time required for the drilling can be calculated in advance from the conveyance speed of the edible body P, the scanning speed of the laser, the size and shape of a hole to be drilled, and the like. Using the calculation result, the distance L1 from the laser output position S to the edible body P at the start of the laser irradiation is matched with the distance L2 from the laser output position S to the edible body P at the end of the laser irradiation such that the laser irradiation direction is perpendicular to the conveyance direction at the intermediate time from the start time to the end time of the laser irradiation. As a result, since the laser irradiation angle with respect to a surface of an edible body P under conveyance can be easily maintained at a drillable angle, desired drilling can be easily and accurately performed on each of the continuously conveyed edible bodies P. However, the timing of laser irradiation on an edible body P is not necessarily limited to that of the present embodiment, and may be appropriately adjusted while viewing the state of drilling on the edible body P.

In the method for drilling an edible body according to the present invention, it is possible to easily form a release hole having a desired size and depth by forming multiple closed curves on a surface of the edible body by laser scanning of a laser irradiation unit. Although a single release hole is formed on the surface of the edible body in the present embodiment, multiple release holes may be formed.

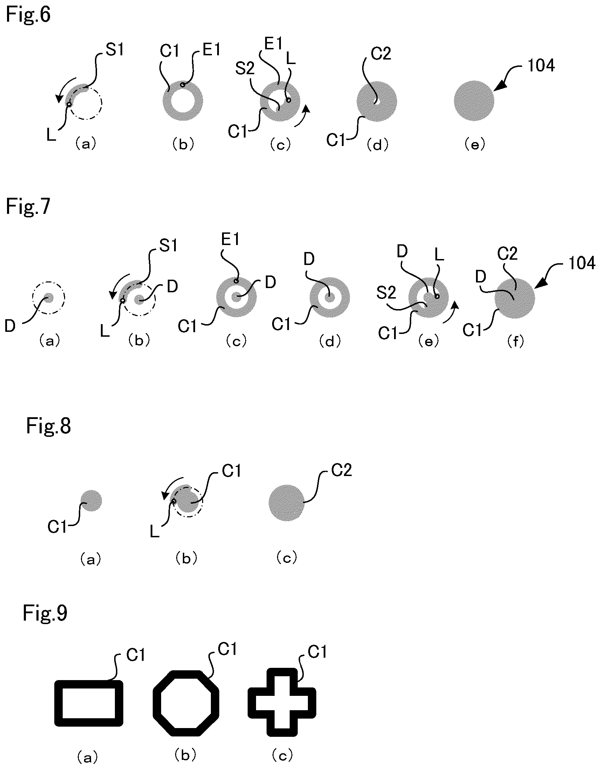

FIG. 6 is a schematic diagram for explaining one example of a method for drilling an edible body, and illustrates a laser scanning trajectory on a surface of the edible body. First, as illustrated in FIG. 6(a), the laser spot L is scanned so as to draw a circle from the scanning start position S1 of the surface of the edible body, and the irradiated portion is volatilized or scattered up to the scanning end position E1 illustrated in FIG. 6(b), thereby forming a recess formed of an annular closed curve C1 as illustrated in FIG. 6(b). The depth of the recess is preferably a depth at which the release hole 104 illustrated in FIG. 4 reaches the drug layer 101, and can be appropriately set according to the thickness of the semipermeable membrane 103 or the like, and is, for example, 100 to 1000 µm.

Next, as illustrated in FIG. 6(c), the laser spot L is scanned along the inner circumference of the closed curve C1, and as illustrated in FIG. 6(d), a recess formed of another closed curve C2 having the same depth as that of the closed curve C1 is formed inside the closed curve C1. The two closed curves C1 and C2 are formed so as to be in contact with each other in the line width direction, whereby a release hole 104 having a circular opening is formed as illustrated in FIG. 6(e). In FIG. 6(d), in a case where an undrilled portion is generated inside the closed curve C2, the release hole 104 can be reliably formed by applying laser irradiation to this portion as well. The diameter of the release hole 104 is appropriately set according to the release rate of the active ingredient contained in the edible body, and is, for example, 0.3 to 1 mm.

Each of the closed curves C1 and C2 may be formed by laser irradiation so as to trace the same portion multiple times, whereby the closed curves C1 and C2 having a desired depth can be reliably obtained by gradually deepening the recess while reducing the laser energy to inhibit carbonization due to heat storage. For example, the center of the laser spot may be scanned for 5 revolutions along a circumference having a diameter of 0.3 mm, and then scanned for 3 revolutions along a circumference having a diameter of 0.1 mm to form the release hole 104. The number of closed curves to be formed by laser irradiation may be three or more, and by forming multiple closed curves concentrically, a release hole 104 can be accurately formed at a desired position regardless of the size thereof.

As illustrated in FIG. 6(c), the scanning start position S2 of the other closed curve C2 is preferably a position farthest from the formation end position E1 of the closed curve C1, and in the present embodiment, the opposite side from the formation end position E1 across the center of the closed curve C1 is set as the scanning start position S2. As a result, it is possible to suppress local heat storage in the edible body P due to laser irradiation.

From the viewpoint of effectively suppressing heat storage in the edible body P, it is also preferable to perform divided irradiation by providing a prescribed heat dissipation time set in advance during the formation of the multiple closed curves C1 and C2. For example, after laser light is applied for 4 msec, the laser light is stopped for 4 msec to dissipate heat, and the laser beam is applied again for 2 msec. The heat dissipation time may be provided during the formation of any one of the multiple closed curves C1 and C2, or may be provided between the formation of one closed curve C1 and the formation of the other closed curve C2.

If the output of the laser light is excessively large, problems such as an increase in size and an increase in cost of the laser oscillator and the cooling system are likely to occur. On the other hand, if the output of the laser beam is excessively small, it is necessary to lengthen the irradiation time. Therefore, there is a possibility that problems such as a decrease in production capacity, carbonization due to heat storage in the edible body, and scattering of fumes may occur. The average output of the laser light to be applied is preferably 10 to 300 W, and more preferably 30 to 60 W.

The scanning speed of the laser light to be applied is preferably 100 to 5000 mm/s, and more preferably 500 to 3000 mm/s because when the scanning speed is excessively high, it is likely to be difficult to control the hole diameter and depth of the release hole, and when the scanning speed is excessively low, such problems as deterioration in production capacity and carbonization of fumes easily occur.

If the spot diameter of the laser light to be applied is excessively large, it is likely to be difficult to control the hole diameter and depth of the release hole. On the other hand, if the spot diameter is excessively small, production efficiency is likely to decrease. Therefore, the spot diameter is preferably 0.1 to 1 mm, and more preferably 0.3 to 0.6 mm.

The formation of one closed curve C1 and the formation of the other closed curve C2 are not necessarily performed continuously. For example, as illustrated in FIG. 7(a), after the laser light is point-applied to the center of the portion to be drilled to form a recessed dot portion D, as illustrated in FIG. 7(b), the laser spot L is scanned so as to draw a circle from the scanning start position S1 with the dot portion D1 as the center, whereby a recess formed of an annular closed curve C1 is formed as illustrated in FIG. 7(c). The closed curve C1 may be formed by tracing the same portion multiple times. Next, as illustrated in FIG. 7(d), after the same portion as the dot portion D is irradiated with the laser light again, the laser spot L is scanned so as to draw a circle from the scanning start position S2 along the annular gap formed between the closed curve C1 and the dot portion D as illustrated in FIG. 7(e). In this way, as shown in FIG. 7(f), a recess formed of the closed curve C2 is formed between the closed curve C1 and the dot portion D, and a release hole 104 can be formed. The closed curve C2 may also be formed by tracing the same portion multiple times. Between the steps of forming the multiple closed curves C1 and C2, there may be provided, besides the pattern formation of the above-described dot portion D, a step of forming a recess formed of another pattern such as a straight pattern or a curved pattern by laser irradiation.

In the method for drilling an edible body P illustrated in FIG. 6, after a closed curve C1 is formed, another closed curve C2 is formed along the inner side of the closed curve C1. However, after a closed curve C1 is formed as illustrated in FIG. 8(a), another closed curve C2 may be formed along the outside of the closed curve C1 as illustrated in FIG. 8(c) by scanning a laser spot L along the outer side of the closed curve C1 as illustrated in FIG. 8(b).

The shape of the closed curve C1 may be a shape other than an annular shape, for example, may be a rectangular shape illustrated in FIG. 9(a), a polygonal shape illustrated in FIG. 9(b), a cross shape illustrated in FIG. 9(c), or the like, and the release hole can be formed by forming one or more other closed curves along the inner side or the outer side of the closed curve C1. Also in this case, a step of forming another pattern such as a dot portion may be provided between the steps of forming the multiple closed curves.

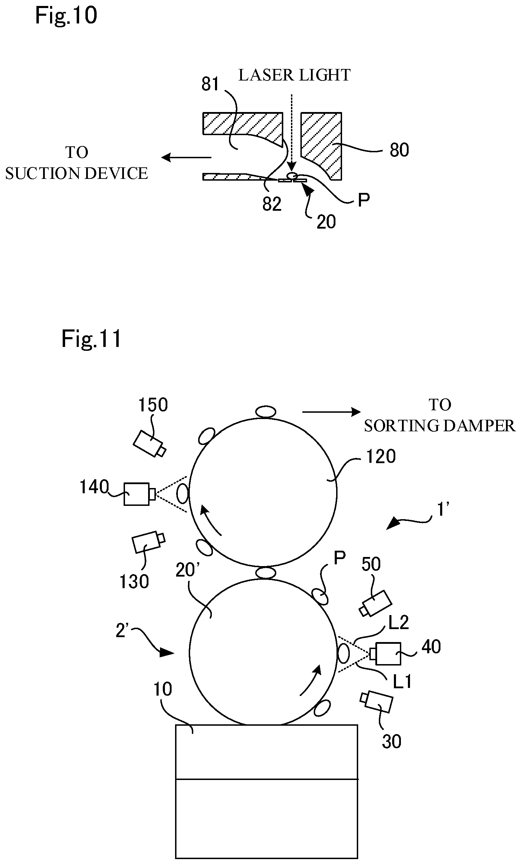

In the drilling method using the drilling device 1 illustrated in FIG. 1, the treatment capacity can be enhanced by performing the drilling during the conveyance of the edible body P, and the drilling can be performed while constantly moving the edible body P from the place where fumes are generated during the laser irradiation on the edible body P. Therefore, the problem that the laser irradiation of the edible body P is blocked by the fumes can be suppressed. To reliably prevent the laser light from being blocked by the fumes, a cover member 80 that covers the edible body P may be provided in the drilling device 1 illustrated in FIG. 1 as illustrated in FIG. 10.

FIG. 10 is a main part sectional view orthogonal to the conveyance direction of the edible body P to be subjected to laser irradiation. In the cover member 80 illustrated in FIG. 10, a suction path 81 connected to a suction device such as a vacuum pump and a passing hole 82 through which laser light passes are formed, and laser can be applied through the passing hole 82 to the edible body P whose upper side is covered by the suction path 81. According to this configuration, since the laser irradiation to the edible body P can be performed while sucking fumes generated from the edible body P, the drilling to the edible body P can be more reliably performed.

The drilling device 1 illustrated in FIG. 1 is configured to apply laser irradiation to the edible body P being conveyed in a straight direction by the second conveying device 20. However, as in the case of the drilling device 1' illustrated in FIG. 11, the second conveying device 20' of the conveying unit 2' is designed to be an adsorption drum capable of vacuum adsorbing the edible body P on the outer peripheral surface, so that laser can be applied to the edible body P being conveyed in a circumferential direction to perform drilling. Also in this case, it is preferable that the distance L1 from the laser output position to the edible body P at the start of the laser irradiation is made equal to the distance L2 from the laser output position to the edible body P at the end of the laser irradiation. In FIG. 11, the same components as those in FIG. 1 are denoted by the same reference signs.

As illustrated in FIG. 11, the conveying unit 2' may further include an adsorbing drum 120 that adsorbs the edible body P received from the second conveying device 20' to the outer peripheral surface on the downstream side in the conveyance direction of the second conveying device 20'. Owing to arranging the pre-detection unit 130, the laser irradiation unit 140, and the post-detection unit 150 along the outer peripheral surface of the adsorbing drum 120, laser can be applied from the laser irradiation unit 140 to the edible body P being conveyed by the adsorbing drum 120. Owing to this configuration, it is possible to reliably form release holes in the semipermeable membrane 103 on the drug layer 101 side illustrated in FIG. 4 using any one of the two laser irradiation units 40, 140 regardless of the orientation of the front and back surfaces of the edible body P, and further, it is also possible to form release holes on both the front and back surfaces of the edible body P with the two laser irradiation units 40, 140.

### Reference Signs List

- 1: drilling device
- 2: conveying unit
- 10: first conveying device
- 20: second conveying device
- 40: laser irradiation unit
- 104: release hole
- C1, C2: closed curve
- P: edible body

## Claims

1. A method for drilling an edible body in which a release hole for releasing an active ingredient accommodated in the edible body to the outside is formed on a surface of the edible body,
the method comprising a laser irradiation step of forming multiple closed curves on the surface of the edible body by laser irradiation,
wherein in the laser irradiation step, after one of the closed curves is formed, another one of the closed curves is formed along an inner side or an outer side of said one of the closed curves, and these two closed curves are brought into contact with each other in a line width direction to form the release hole.

2. The method for drilling an edible body according to claim 1, wherein the multiple closed curves are formed concentrically.

3. The method for drilling an edible body according to claim 1, wherein formation of said another one of the closed curves is started at a position farthest from a formation end position of said one of the closed curves.

4. The method for drilling an edible body according to claim 1, wherein a prescribed heat dissipation time is provided during formation of the multiple closed curves.

5. The method for drilling an edible body according to claim 1, wherein said one of the closed curves is formed by performing laser irradiation such that the same portion is traced multiple times.

6. The method for drilling an edible body according to claim 1, wherein the laser irradiation to the edible body is performed while sucking fumes generated from the edible body.

7. The method for drilling an edible body according to claim 1, wherein the edible body under conveyance is subjected to laser irradiation such that a distance from a laser output position to the edible body is equal at a start time and an end time of the laser irradiation.

8. The method for drilling an edible body according to claim 1, wherein an average output of the laser light to be applied is 10 to 300 W, a scanning speed is 100 to 5000 mm/s, and a spot diameter is 0.1 to 3 mm.
